# EUROPEAN PATENT APPLICATION

(11) **EP 4 108 638 A1**
(43) Date of publication of application: **28.12.2022**
(21) Application number: 22178730.2
(22) Date of filing: 13.06.2022
(51) Int. Cl.: C02F 1/66, C02F 1/76, C02F 103/42

(54) **MULTIFUNCTIONAL SOLID AND DISSOLVING WATER-TREATMENT COMPOSITIONS FOR POOLS AND SPAS**

(30) Priority: 21.06.2021 US 202163212938 P
(71) Applicant: Sani-Marc Inc., Victoriaville, Quebec G6P 7E3 (CA)
(72) Inventor: MARCHAND, Patrick, Victoriaville, Québec,, G6P 8B5 (CA); BLONDEAU, Dorian, Trois-Rivières, Québec,, G8Y 5R8 (CA); CHARTRAND, Arianne, Drummondville, Québec,, J2C 7E2 (CA); CARDENAS BATES, Ilse Ileana, Victoriaville, Québec,, G6P 9W4 (CA); ROMANENS, Alexandre, Notre-Dame-du-Bon-Conseil, Québec,, J0C 1A0 (CA)
(74) Representative: Icosa

(57) **Abstract**

Described herein are solid compositions for water treatment of swimming pools and spas. The solid composition comprises, in a single solid product in the form of a tablet, puck, briquette, a capsule, powder mix or the like, a combined source of a plurality of chemical compounds such as chlorine, algaecide, clarifier and pH adjuster. In embodiments the solid composition comprises at least a combination of (i) a source of chlorine for killing bacteria and (ii) a neutralizer for ensuring a proper pH balance. In embodiments the solid composition is be formulated as a bilayer. In embodiments the solid composition is formulated as a bilayer, a first layer comprising sodium dichloroisocyanurate (NaDCC) and a second layer comprising trichloroisocyanuric acid (TCCA).

## Description

### CROSS REFERENCE TO RELATED APPLICATION

This patent application claims priority to United States patent application US 63/212,938 filed on June 21, 2021 which content is incorporated herein by reference in its entirety.

### FIELD OF THE INVENTION

The invention relates to the field of water treatment compositions, and more particularly to solid compositions for water treatment of swimming pools and spas, which comprise, in a single solid product in the form of a tablet, puck, briquette, a capsule, powder mix or the like, a combined source of a plurality of chemical compounds such as chlorine, algaecide, clarifier and pH adjuster.

### BACKGROUND OF THE INVENTION

Water treatment of swimming pools and spas may be a task that is cumbersome and complex because it requires controlling simultaneously many chemical parameters. Currently, such water treatment is carried out in several stages with the addition of a series of different chemicals, typically in a given order. The main important elements in the treatment of these water parameters are sanitation with an oxidant for the elimination of bacteria, sanitation with an algaecide for eliminating algae, removal of organic matter by a clarifier and ensuring a proper pH balance of the water.

Examples of solid water treatment products comprising a combination of a plurality of water treatment compounds are described for instance in these issued patents: US 6,852,238; CA 2,116,454; US 5,648,314; US 5,464,636; US 4,389,318, and in these patent publications: WO 91/18510; EP3434104; US2017/0267560; CA 2,116,454 and JP1991012289. However these existing products suffer from one or more deficiencies such as they dissolve too rapidly, they may be difficult and/or expensive to manufacture, and/or they do not provide a complete solution for controlling all the required chemical parameters in order to ensure proper quality and proper water balance of swimming pools and spas.

Accordingly, there is a need for a product that is simple and easy to use for an easier treatment and easier maintenance of the water of swimming pools and spas.

There is also a need for solid water treatment compositions, which are capable of providing a complete solution for the sanitation against bacteria and algae, the removal of organic matters and for ensuring a proper pH balance of the water of swimming pools and spas.

There is more particularly a need for a tablet or a puck that does not dissolve too rapidly in the water in order to provide for continuous and slow release of the chemicals and which comprise, in a single solid product, a combined source of chlorine, algaecide, clarifier and pH adjuster.

The present invention addresses these needs and other needs as it will be apparent from the review of the disclosure and description of the features of the invention hereinafter.

### BRIEF SUMMARY OF THE INVENTION

According to one aspect, the invention relates to solid water-treatment composition for swimming pools and spas, comprising a combination of (i) a source of chlorine for killing bacteria and (ii) a neutralizer for ensuring a proper pH balance.

According to another aspect, the invention relates to a solid water-treatment composition comprising a combination of (i) a source of chlorine, (ii) a neutralizer, (iii) an algaecide and (iv) a clarifier.

According to another aspect, the invention relates to a solid water-treatment composition consisting of (i) a source of chlorine, (ii) a neutralizer, (iii) an algaecide and (iv) a clarifier.

According to another aspect, the invention relates to a solid water-treatment composition for use in swimming pools and spas, the composition comprising a combination of (i) a source of chlorine for killing bacteria and (ii) a neutralizer for ensuring a proper pH balance.

According to another aspect, the invention relates to a bilayer solid water-treatment composition comprising: (i) a first layer comprising sodium dichloroisocyanurate (NaDCC); and (ii) a second layer comprising Trichloroisocyanuric acid (TCCA).

According to another aspect, the invention relates to a method for treatment of water of a swimming pool or a spa, comprising depositing into said pool or spa a single solid dissolving product providing for a complete solution for the sanitation, the removal of organic matter and pH balance of said water.

According to another aspect, the invention relates to a method for treatment of water of a swimming pool or a spa, comprising depositing in said pool or spa one or more of a puck, tablet, briquette, capsule, a powder mix, granule and agglomerate composed of a compacted water-treatment composition as defined herein.

According to another aspect, the invention relates to a method for treatment of water, comprising contacting said water with a solid water-treatment composition as defined herein.

According to another aspect, the invention relates to a method for maintaining an equilibrium in chemicals in the water of a swimming pool or a spa, comprising: (a) adjusting to a desirable equilibrated level one or more water parameters of chlorine concentration, algaecide concentration, water clarity and pH; and (b) depositing on a regular basis in said pool or spa one or more of puck(s), tablet(s), briquette(s), capsule(s), a powder mix, granule(s) and agglomerate(s) composed of a compacted water-treatment composition as defined herein for maintaining said equilibrated level.

According to another aspect, the invention relates to a bucket or container comprising a plurality of pucks, tablets, briquettes, capsules, powder mix, granules and/or agglomerates composed of a compacted water-treatment composition as defined herein.

According to another aspect, the invention relates to a kit for water treatment of swimming pools or spas comprising (i) a bucket or container as defined herein, and (ii) at least one of (a) a measuring cup and (b) water analysis product(s).

Additional aspects, advantages and features of the present invention will become more apparent upon reading of the following non-restrictive description of preferred embodiments, which are exemplary and should not be interpreted as limiting the scope of the invention.

### BRIEF DESCRIPTION OF THE FIGURES

In order for the invention to be readily understood, embodiments of the invention are illustrated by way of example in the accompanying Figures.
**Figure 1** is a bar graph showing the mass of acid required to neutralize 30 g of 65% w/w calcium hypochlorite per 10 000 L of water, in accordance with **Example 3.**
**Figure 2** is a bar graph of a stability experiment showing percentage of loss of chlorine after 14 days at 54 °C of the mixture of Composition H, Composition L and Composition M compared to a tablet of 65% w/w calcium hypochlorite, in accordance with **Example 4.**
**Figure 3** is a bar graph of a stability experiment showing percentage of loss of chlorine after one year at room temperature (20-25°C) for Composition H, in accordance with **Example 4.**
**Figure 4** is a line graph showing variation of pH vs % chlorine in a swimming pool, using pucks comprising Composition L, in accordance with **Example 5.**

Further details of the invention and its advantages will be apparent from the detailed description included hereinafter.

### DETAILED DESCRIPTION OF EMBODIMENTS

In the following description of the embodiments, references to the accompanying figures are illustrations of an example by which the invention may be practiced. It will be understood that other embodiments may be made without departing from the scope of the invention disclosed.

### General Overview

The invention relates to multifunctional solid and dissolving water-treatment compositions for pools and spas. The water-treatment compositions are multifunctional because they comprise a combination of two or more chemicals that are typically required for ensuring proper sanitation and pH balance of the water of swimming pools and spas. Therefore the water-treatment composition of the invention is advantageous because it provides for an easier and simpler maintenance of desired chemical parameters of these waters. Particularly, in their complete form, the solid water treatment compositions of the invention are capable of providing a complete solution for the sanitation, the removal of organic matter and ensuring proper pH balance of the water of swimming pools and spas.

### Solid and dissolving water-treatment compositions

One particular aspect of the invention concerns a solid water-treatment composition comprising a combination of (i) a source of chlorine for killing bacteria, (ii) a neutralizer for ensuring a proper pH balance, and optionally at least one of (iii) an algaecide for killing algae and (iv) a clarifier for removal of organic matter.

In embodiments the **source of chlorine** is selected from calcium hypochlorite (also known as "Calhypo" or "hypochlorous acid calcium salt" or "calcium oxychloride" or "chloride of lime" or "Ca(ClO)₂"), trichloroisocyanuric acid (also known as "TCCA" or "1,3,5-Trichloro-1,3,5-triazine-2,4,6(1H,3H,5H)-trione" or "Trichloro-s-triazinetrione" or Symclosene "Symclosene" or "TCICA" OR "C₃Cl₃N₃O₃") and sodium dichloroisocyanurate (also known as "NaDCC" or "SDIC" OR "sodium dichloroisocyanurate" OR "sodium troclosene" OR "troclosenum natricum") and mixtures thereof.

In embodiments the solid water-treatment composition comprises about 10% w/w to about 90% w/w chlorine, or about 20% w/w to about 80% w/w chlorine, or about 25% w/w to about 75% w/w chlorine, or about 40% w/w to about 60% w/w chlorine. In embodiments the solid water-treatment composition comprises about 40% w/w, or about 45% w/w, or about 50% w/w, or about 55% w/w, or about 60% w/w, or about 65% w/w, or about 70% w/w, or about 75% w/w, or about 80% w/w, or about 85% w/w chlorine.

In preferred embodiments the source of chlorine is calcium hypochlorite, more preferably in a powder or a granular form (e.g. granular form with about 60 % w/w to about 70% w/w available chlorine sold by Arch Chemicals, Inc. or China Petrochemical International Co. Ltd).

In embodiments the **neutralizer** (or **pH adjustment agent)** is selected from sodium bisulfate (also known as "sodium hydrogen sulfate" or "sodium acid sulfate" or "bisulfate of soda" or "NaHSO₄"), citric acid (i.e. C₆H₈O*7*), isocyanuric acid (also known as "cyanuric acid" or "1,3,5-triazine-2,4,6-triol" or "1,3,5-Triazine-2,4,6(1H,3H,5H)-trione" or "1 ,3,5-Triazinetriol" or "s-Triazinetriol" or "s-Triazinetrione" or "Tricarbimide" or "(CNOH)₃"), boric acid (also known as "hydrogen borate" or "boracic acid" or "orthoboric acid" or "B(OH)₃"), sodium carbonate (also known as "disodium carbonate" or "washing soda" or "soda ash" or "calcined soda" or "carbonic acid disodium salt" or "Na₂CO₃"), sodium bicarbonate (also known as "sodium hydrogen carbonate" or "baking soda" or "NaHCO3"), sodium citrate (also known as "trisodium citrate" or "citrosodine" or "C₆H₅O₇Na₃"), sodium hydroxide (also known as "caustic soda" or "sodium hydrate" or "NaOH"), potassium hydroxide (also known as "caustic potash" or "potassium hydrate" or "KOH"), sodium borate (also known as "borax" or "sodium tetraborate" or "disodium tetraborate") and mixtures thereof.

In embodiments, the neutralizer is selected in accordance with the source of chlorine. For instance, if the source of chlorine is a base (e.g., calcium hypochlorite or lithium hypochlorite), then the neutralizer will be an acid (e.g. any of sodium hydrogen sulfate, citric acid, isocyanuric acid, boric acid, etc. and mixtures thereof).

On the other hand, if the source of chlorine is an acid (e.g., TCCA or NADCC), then the neutralizer may be a base (e.g. any of sodium carbonate, sodium bicarbonate, sodium citrate, sodium hydroxide, potassium hydroxide, sodium borate, etc. and mixtures thereof) or an additional source of chlorine that is a base (e.g. calcium hypochlorite, lithium hypochlorite, etc.).

However, since pH in opened environments such as pools and spas has a natural tendency to increase, in embodiments the neutralizer may also be an acid (e.g. citric acid, boric acid, and mixtures thereof), even if the source of chlorine is already an acid (e.g. TCCA, TCCA/NaDCC).

In embodiments the solid water-treatment composition comprises about 10% w/w to about 70% w/w neutralizer, or about 15% w/w to about 55% w/w neutralizer, or about 20% w/w to about 45% w/w neutralizer, or about 15% w/w to about 25% neutralizer.

In preferred embodiments the neutralizer is sodium bisulfate (e.g. crystal form at more than 90% sold by Jones-Hamilton Co. or Charles Tennant & Co. Ltd. or Cambrian solutions or Intersac Inc. or Kobitex Inc. or Lonza Inc.).

In embodiments the **clarifier** is selected from inorganics salts such as aluminium sulfate (also known as "aluminium sulphate" or "alun" or "aluminium salt" or "Alunogenite" or "Al₂(SO₄)₃"), ferrous sulfate (also known as "iron(II) sulfate" or "FeSO₄"), PolyDADMAC (also known as "polydiallyldimethylammonium chloride" or "polyDDA" or "polyquaternium-6"), polyamides, polyacrylamide (also know as "poly(2-propenamide)"), gamma polygluconic acid (Poly-γ-glutamic acid, γ-PGA), chitosan and mixtures thereof.

In embodiments the solid water-treatment composition comprises 0.1% w/w to about 20% w/w clarifier, or about 0.5% w/w to about 10% w/w clarifier, or about 1% w/w to about 5% w/w clarifier, or about 0.5% w/w to about 1.5% w/w clarifier.

In preferred embodiments the clarifier is aluminium sulfate (e.g. granular form at 100% sold by Brenntag Canada Inc. or Univar Solutions).

In embodiments the **algaecide** is selected from zinc oxide (i.e. ZnO), copper sulfate (also known as "cupric sulfate" or "CuSO₄), quaternary ammonium compounds (also known as "quats"), polixetonium chloride (also known as "WSCP"), N-(2-hydroxyl) propyl-3-trimethyl ammonium chitosan chloride (also known as "HTCC") and mixtures thereof.

In embodiments the solid water-treatment composition comprises about 0.1% w/w to about 10% w/w algaecide, or about 0.2% w/w to about 5% w/w algaecide, or about 0.25% w/w to about 2% w/w algaecide, or about 0.25% w/w to about 1% w/w algaecide, or about 0.4% w/w to about 0.6% w/w algaecide.

In preferred embodiments the algaecide is zinc oxide (e.g. powder form at 96% to 99.5% of active zinc sold by American Chemet Corporation.).

In embodiments, the solid water-treatment composition is selected from Composition H and Composition I:

| | **Composition H** | **Composition I** |
|---|---|---|
| | % w/w | % w/w |
| Calhypo (65 %w/w chlorine) | 78.28 | 78.28 |
| Sodium bisulfate | 19.89 | 20.67 |
| Aluminium sulfate | 1.28 | 0.50 |
| Zinc Oxide (96 %w/w zinc) | 0.55 | 0.55 |

In embodiments, the solid water-treatment composition is selected from Composition J and Composition K:

| | **Composition J** | **Composition K** |
|---|---|---|
| | %w/w | %w/w |
| TCCA (90% w/w chlorine) | 69.30 | - |
| Calhypo (65%w/w chlorine) | - | 85.90 |
| Sodium carbonate | 26.89 | - |
| Citric acid | - | 13.61 |
| Aluminium sulfate | 3.26 | - |
| Zinc Oxide (96 %w/w zinc) | 0.55 | 0.49 |

In embodiments, the solid water-treatment composition consists of **Composition L:**

| | **Composition L** |
|---|---|
| | %w/w |
| TCCA (90% w/w chlorine) | 62.10 |
| NaDCC (62 %w/w chlorine) | 33.52 |
| Boric acid | 1.27 |
| Aluminium sulfate | 2.61 |
| Zinc oxide (96 %w/w zinc) | 0.49 |

In one embodiment, **Composition L** is manufactured as a bi-layer composition, comprising two superposed layers. In one particular embodiment, **Composition L** comprises a first layer comprising NaDCC and a second layer comprising TCCA. At least one of the layers (preferably the TCCA layer) comprises the zinc oxide and aluminium sulfate. Boric acid may be present in any one or in both layers (preferably the TCAA layer).

In embodiments, the solid water-treatment composition consists of **Composition M:**

| | **Composition M** |
|---|---|
| | %w/w |
| TCCA (90% w/w chlorine) | 54.39 |
| NaDCC (62 %w/w chlorine) | 29.36 |
| Boric acid | 1.11 |
| Aluminium sulfate | 2.29 |
| Zinc oxide (96 %w/w zinc) | 0.29 |
| Citric acid | 12.57 |

In one embodiment, **Composition M** is manufactured as a bi-layer composition, comprising two superposed layers. At least one of the layers (preferably the NaDCC layer) comprises the zinc oxide and aluminium sulfate. Boric acid and/or citric acid may be present in any one or in both layers (preferably the TCAA layer). In one particular embodiment, **Composition M** comprises a first layer comprising NaDCC/aluminium sulfate/zinc oxide and a second layer comprising TCCA/boric acid/citric acid.

Solid water-treatment composition in accordance with the present invention may also comprise one or more additional components including, but not limited to, a dye, a buffer, a preservative, a stabilizer, a thickening agent, an anticaking agent (e.g. borax or adipic acid) and mixtures thereof.

In embodiments, the compounds composing the solid water-treatment composition are mixed together then compacted or compressed in the form of any suitable solid product including for instance, but not limited to, in the shape of a puck, a tablet, a briquette, a capsule, a powder mix, granules, an agglomerate and the like. Multilayer compositions may be manufactured using any suitable compacting or compressing method known in the art.

Such mixing can be carried out in accordance with methods and techniques known in the art. For instance, powders can be mixed with a mixer suitable for free-flowing solids, like a ribbon mixer or a tumbling mixer. Mixing is carried out during an appropriate amount of time (e.g. during at least 5 minutes) and at a suitable speed (variable depending on the device) until desired homogeneity and then the mixed powder can be compacted in a desired solid product (e.g. a puck, a tablet, etc.) using any suitable device and conditions, for instance by using an automatic tablet press or an hydraulic press, wherein the pressure is adjusted according to a desired dissolution rate for the tablet to be produced.

The present invention further encompass multiple-layers or multilayer compositions comprising two (2) layers, three (3) or more layers, as exemplified for instance herein above for **Composition L** and **Composition M** (two layers). Multilayer compositions may be particularly useful providing a variable speed of decomposition, for instance a layer comprising a NaDCC for a « boost » of chlorine upon dropping the puck in the water, and a slower and extended dissolution for providing an extended release of chlorine and other chemicals (e.g. TCAA, neutralizer, clarifier, etc.). In such multilayer compositions, the neutralizer may be present in any of the layers and/or in all layers. Likewise, any clarifier and/or algaecide may be present in any of the layers. However, it may be preferable to have the neutralizer, clarifier and/or algaecide in a slowly dissolving layer for extended release of these chemicals in the pools and spas.

Accordingly, a related aspect of the invention relates to a method for manufacturing solid water-treatment composition in the shape of a puck, a tablet, a briquette, a capsule, a powder mix, granules and an agglomerate, comprising compacting into said shape a mixture comprising a water-treatment composition as defined herein.

Related aspects of the invention relates to retail store products such as a bucket or a container comprising a plurality of pucks, tablets, briquettes, capsules, a powder mix, granules and/or agglomerates as defined herein. Such buckets or containers may comprise various quantities of the solid product, for instance 500 g, 1 kg, 2 kg, 5 kg, 10 kg, 25 kg, 50 kg or more.

An additional related aspect of the invention concerns a kit for water treatment of swimming pools or spas, the kit comprising: (i) a bucket or a container as defined herein and at least one of (a) a measuring cup and (b) water analysis product(s).

### Methods of water treatment

As mentioned hereinbefore, the water-treatment compositions of the invention are advantageous because they provide for an easier and simpler maintenance of desired chemical parameters of the waters of swimming pools and spas.

Accordingly, a related aspect of the present invention relates to a method for treatment of water of a swimming pool or a spa, comprising depositing into the pool or spa a single solid dissolving product that can provide for a complete solution for the sanitation (e.g. killing or inhibition of both bacteria and algae), the removal of organic matter and pH balance of said waters.

Another related aspect concerns a method for maintaining an equilibrium in chemicals of the waters of a swimming pool or a spa. According to one embodiment, the method comprises:
(a) adjusting to a desirable equilibrated level one or more water parameters of chlorine concentration, algaecide concentration, water clarity and pH; and
(b) depositing, on a regular basis, in the pool or spa, one or more of puck(s), tablet(s), briquette(s), capsule(s), a powder mix, granule(s) and agglomerate(s) composed of a compacted and dissolving water-treatment composition providing for a complete solution for the sanitation (e.g. killing or inhibition of both bacteria and algae), the removal of organic matter and pH balance of the water of the pool or spa.

In particular embodiments, the depositing step comprises depositing in the pool or spa a solid water-treatment composition as defined herein before, preferably a solid water-treatment composition comprising a combination of at least a source of chlorine for killing bacteria and a neutralizer for ensuring a proper pH balance. More preferably the solid water-treatment composition further comprises at least one of an algaecide for killing algae and a clarifier for removal of organic matter.

In embodiments, the puck, tablet, briquette, capsule, powder mix, granule and/or agglomerate is deposited in the skimmer pool or spa or it is deposited in floater floating at the surface of the pool or spa.

As is known in the field of water treatment of swimming pools and spa, it is preferable to test the waters periodically and add required pool chemicals on a regular basis in order to maintain a suitable water quality (e.g. pH balance, clarity, chlorine level, algaecide level, etc.). Likewise, in accordance with the methods defined above, depositing of the solid water-treatment composition (e.g. puck, tablet, etc.) is carried out on a regular basis as well.

Frequency and amount of such depositing may vary according to various factors known in the art including, but not limited to, external factors such as weather (UV rays, sunshine duration, rain, etc.), water temperature of the pool or spa, presence of organic matters, presence of many or only a few swimmers and bathers, previous shocking of the water with a high dose of chlorine, etc.

In embodiments, the depositing is carried out every day, or 6 times a week, or 5 times a week, or 4 times a week, or 3 times a week, or 2 times a week, or 1 time a week, or once every two week, or two-times during a period of two weeks, or three times during a period of two weeks, or four times during a period of two weeks, or five times during a period of two weeks, or six times during a period of two weeks, or seven times during a period of two weeks, or eight times during a period of two weeks, or nine times during a period of two weeks, or 10 times during a period of two weeks, or 11 times during a period of two weeks, or 12 times during a period of two weeks, or 13 times during a period of two weeks.

Advantageously, in accordance with the present invention, depositing is less frequent than with known methods where it is required to add chemicals on a daily basis to maintain a desired equilibrium of chemicals and maintain a water of good quality. In embodiments, a frequency of depositing less than daily enables to maintain a desired equilibrium in chemicals. In embodiments, the depositing is carried out every other day or less to maintain a desired equilibrium in chemicals. In embodiments, the depositing is carried out twice a week or less to maintain the desired equilibrium.

Advantageously, using a solid water-treatment composition will reduce the amount of time being required by a user to treat the water since a user can add multiple products at the same time, without having to wait in between separate addition of the individual chemical products, in order to obtain an equilibrated water of desired quality.

In embodiments, the amount of solid water-treatment composition deposited in the pool or spa is adjusted in accordance with the volume of water of the pool or spa in order to obtain a desired chlorine concentration, algaecide concentration, clarifier concentration and/or desired pH of the water. For instance, for a swimming pool, desirable concentrations may between about 1 ppm and about 3 ppm of chlorine and pH between about 7.2 to about 7.8. For a spa, desirable concentrations may between about 3 ppm and about 5 ppm of chlorine and a pH between about 7.2 to about 7.8. For both swimming pool and spa, the concentration of algaecide and clarifier is adjusted so that the water remains clear.

The following **Table** 1 provides examples of specific amounts solid water-treatment composition that could be deposited in the pool or spa, depending of the volume of water for a mixture containing about 50.9% w/w of chlorine (Composition H):

**Table 1:**

| **POOL** | | | **SPA** | |
|---|---|---|---|---|
| **Volume of water (liter)** | **Amount of solid water-treatment composition (gram)** | | **Volume of water (liter)** | **Amount of solid water-treatment composition (gram)** |
| 10 000 | 19.6 to 68.9 | | 1 000 | 5.9 to 9.8 |
| 20 000 | 39.3 to 117.9 | | 1 500 | 8.8 to 14.7 |
| 40 000 | 78.6 to 235.8 | | 2 000 | 11.8 to 19.6 |
| 50 000 | 98.2 to 294.7 | | 3 000 | 17.7 to 29.5 |
| 60 000 | 117.9 to 353.6 | | 4 000 | 23.6 to 39.3 |
| 80 000 | 157.2 to 471.5 | | 5 000 | 29.5 to 49.1 |
| 100 000 | 196.5 to 589.4 | | 10 000 | 58.9 to 98.2 |

Those skilled in the art will recognize, or be able to ascertain, using no more than routine experimentation, numerous equivalents to the specific procedures, embodiments, claims, and examples described herein. Such equivalents are considered to be within the scope of this invention, and covered by the claims appended hereto. The invention is further illustrated by the following examples, which should not be construed as further or specifically limiting.

### EXAMPLES

The examples set forth herein below provide exemplary methods and results showing development, feasibility and utility of the compositions, methods and/or kits, according to the invention.

Neutralization of the oxidant: The amount of acid or base needed to neutralize each of the oxidants was determined. Briefly, a small-scale test was carried out prior to a larger-scale test in a swimming pool. A fixed amount of powdered oxidants was mixed with 20 L of water. While mechanical stirring the solution, an acid or a base was added to bring the pH of the water to between 7.2-7.8.

Chemical compatibility: In order to determine the compatibility of the various constituents of the pellets (i.e. oxidant, neutralizer, clarifier and algaecide), the constituents were previously mixed together in powder form in a glass container. Visual appearance and change in temperature of the mixture were observed and noted for each mixture.

Pressing and hardness of the pellets: Using a hydraulic press and circular molds, each mixture was pressed at different pressure values in the shape or a circular tablet or puck (about 7.6 cm in diameter and a thickness of about 2.5 cm). The hardness of each of the tablet was measured using a material deformation meter (EZ Test^{™}, EZ-LX^{™}, Shimadzu^{™}).

Dissolution of the tablets: To determine the time required for a tablet to dissolve in water, tests were carried out in swimming pools. Each pellet was added individually in a floater floating freely at the surface of the pool. Pool parameters (pH, chlorine, hardness, alkalinity) were measured before, during and after adding tablets into the pool. The time required for a pellet to dissolve in the floater was measured and visual observations were noted.

Physical and chemical stability: Tests at high temperature were carried to assess the physical stability of the pellets. Samples were baked for 14 days at 54°C and physical changes (color, bubble formation, etc.) were observed and noted. In addition, stability of the chlorine level was evaluated by determining chlorine levels before and after the 14-day heating period. These results are indicative of the stability after one year at room temperature.

### Example 1: Combination of TCCA with sodium borate in an isolated system

Trichloroisocyanuric acid (TCCA) is an oxidant that is frequently used in swimming pool sanitation. It is known to lower the pH of the water in solution. In order to neutralize the pH, a base was thus required.

In this test, 1.83×10⁻⁴ mol of TCCA was mixed with 9.16×10⁻⁵ mol of sodium borate (borax) in 2 L of water. The pH of the solution decreased from 7.37 to 7.35 while the alkalinity remained at 150 ppm. Thus, for a volume of 10 000L of water, 31.4 g of sodium borate would be required for 62.7 g of TCCA (90%w/w of Cl₂).

### Example 2: Combination of TCCA with calcium hypochlorite

Mixtures of TCCA and calcium hypochlorite (Calhypo) were prepared in different proportions and tested. The two compounds were mixed to form a pellet. The powdered mixture seems compatible, although very reactive in the presence of water. It was determined that a concentration of 9.4 ppm calcium hypochlorite can neutralize 21.3 ppm TCCA. Therefore, for reaching 2.5 ppm of chlorine in a spa or a swimming pool comprising 10 000 L of water, a mixture comprising 10.6 g of calcium hypochlorite (70%w/w of Cl₂) and 19.5 g of TCCA (90%w/w of Cl₂) would be required.

### Example 3: Combination of calcium hypochlorite with isocyanuric acid, citric acid or sodium bisulfate

Calcium hypochlorite was tested an alternative source of chlorine to TCCA. Since calcium hypochlorite is an oxidant that increases the pH of water in solution, an acid is required to neutralize the pH of the water. Several tests were carried out by combining calcium hypochlorite with isocyanuric acid, citric acid or sodium bisulfate.

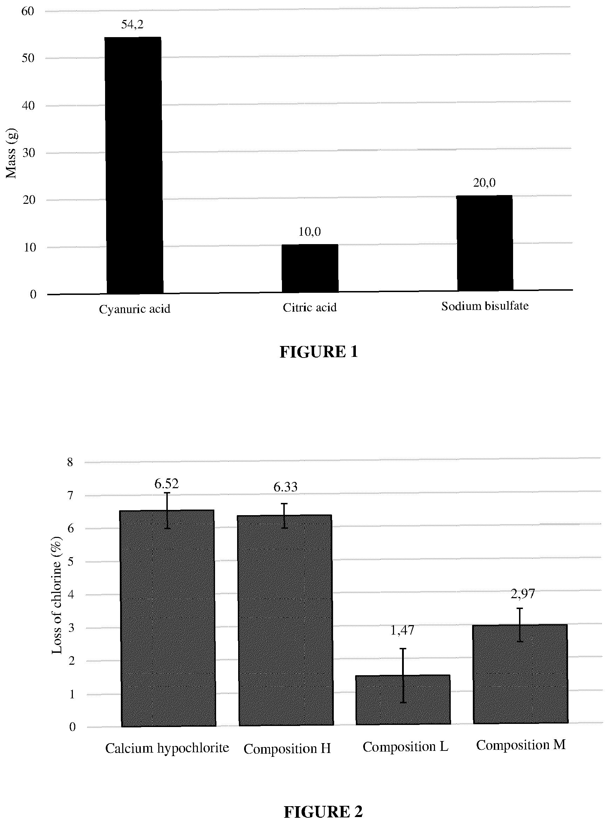

In a water volume of 10 000 L, 30 g of calcium hypochlorite (65%w/w of Cl₂) releases 1.95 ppm of chlorine. As shown in **Figure 1****,** a smaller amount of citric acid is required to restore the pH between 7.2 and 7.8, as compared to the amounts for isocyanuric acid and sodium bisulfate.

### Example 4: Combination of a source of chlorine, a neutralizer, a clarifier and an algaecide

A mixture of Calcium hypochlorite (Calhypo 65 %w/w of Cl₂), isocyanuric acid, polyDADMAC and quaternary ammonium (N-Alkyl (C₁₄ 95%, C₁₆ 2%, C₁₂ 3% w/w) dimethyl benzyl ammonium chloride) was prepared in the following concentrations: 31% w/w, 56% w/w, 2.6% w/w and 10.5% w/w. The mixture was homogeneous and did not form undesirable agglomerates.

A mixture of Calhypo 65%w/w of Cl₂, citric acid, polyDADMAC and quaternary ammonium (N-Alkyl (C₁₄ 95%, C₁₆ 2%, C₁₂ 3% w/w) dimethyl benzyl ammonium chloride) was made in the following concentrations: 63 %w/w, 23.7 %w/w, 2.6 %w/w and 10.7 %w/w. Citric acid was selected for that particular mixture because, as shown previously, it was the acid that worked best in reducing the pH of Calhypo (see **Figure 1**). Based on the results of Example 3, a ratio of 3:1 between Calhypo and citric acid was selected. Tests in a swimming pool showed that the mixture raised the pH slightly. The ratio between Calhypo and the acid was therefore increased and it was found that a ratio of 3: 1.13 (Calhypo:citric acid) was better for controlling the pH.

Additional mixtures were prepared in which the quaternary ammonium was replaced by zinc oxide. Various mixtures comprising Calhypo 65 %w/w of Cl₂, citric acid, zinc oxide and polyDADMAC were made, as shown in **Table 2.**

**Table 2:**

| **Compound** | **Composition A** | **Composition B** | **Composition C** |
|---|---|---|---|
| | **%w/w** | **%w/w** | **%w/w** |
| Calhypo (65%w/w of chlorine) | 70.30 | 72.27 | 85.90 |
| Citric acid | 26.48 | 27.22 | 13.61 |
| PolyDADMAC | 2.46 | - | - |
| Zinc oxide (98% of zinc) | 0.49 | 0.51 | 0.49 |

Following dissolution tests, the results showed that Composition A is not completely dissolved after 70.5h in a floater. The dissolution time was shorter (22h) when the tablet was added directly to the skimmer. Composition B (i.e. without PolyDADMAC) dissolved much faster in the floater (about less than 22h). The dissolving time of Composition C (also without PolyDADMAC and the smallest amount of acid) was about less than 22h.

Additional mixtures were prepared in which citric acid was replaced by sodium bisulfate as shown in **Table 3.**

**Table 3:**

| **Compound** | **Composition D** | **Composition E** | **Composition F** | **Composition G** |
|---|---|---|---|---|
| | **%w/w** | **%w/w** | **%w/w** | **%w/w** |
| Calhypo (65% of chlorine) | 59.72 | 79.62 | 78.28 | 58.95 |
| Sodium bisulfate | 39.79 | 19.89 | 19.89 | 39.23 |
| PolyDADMAC | - | - | 1.33 | 1.33 |
| Zinc oxide (98% of zinc) | 0.49 | 0.49 | 0.49 | 0.49 |

Preliminary tests were carried out without the polymer (i.e. PolyDADMAC) in order to determine the quantity of acid required into a swimming pool in order to neutralize the Calhypo in a pellet (Composition D and Composition E). It was found that 19.89 %w/w sodium bisulfate was sufficient to neutralize the Calhypo in the Composition E. In the oven stability test, the chlorine in that formulation was shown to be stable, without any change in the formulation physical properties.

PolyDADMAC was also added to the mixture of Calhypo and sodium bisulfate (Composition F and Composition G). The dissolution tests were conclusive since the pH, alkalinity and chlorine level measured in a swimming pool were stable and within optimal parameters.

Additional formulations (Compositions H and I) were prepared by mixing Calhypo, sodium bisulfate, zinc oxide and aluminium sulfate as the clarifier, as shown in **Table 4:**

**Table 4:**

| **Compound** | **Composition H** | **Composition I** |
|---|---|---|
| | **%w/w** | **%w/w** |
| Calhypo (65% of chlorine) | 78.28 | 78.28 |
| Sodium bisulfate | 19.89 | 20.67 |
| Aluminium sulfate | 1.28 | 0.50 |
| Zinc Oxide (96% of zinc) | 0.55 | 0.55 |

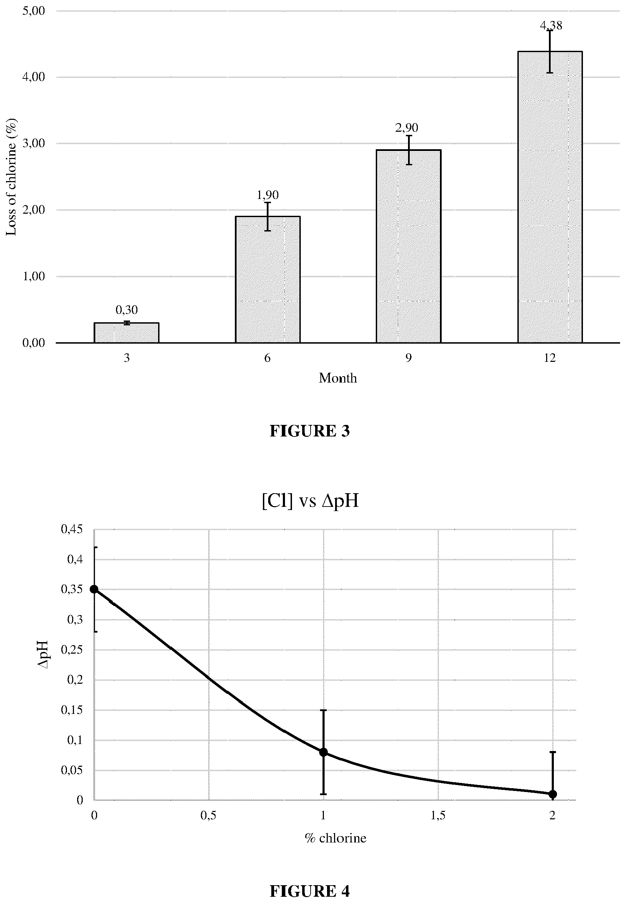

Oven stability of the mixture of Composition H is shown in **Figure 2****.** Stability was found acceptable after 14 days at 54°C: Composition H lost only 6.33% of its chlorine while a commercial tablet of calcium hypochlorite containing 60% of chlorine lost 6.52% of its original chlorine content. The visual appearance of the two samples was identical after the 14-day stability test. As shown in **Figure 3****,** composition H was also found to be stable for over a year at room temperature (20-25°C), the composition displaying a loss of only 4.4% of its chlorine at 12 months. In addition, visual inspection revealed no deformation or physical change of the pellets after the 1-year period.

As shown in **Table 4** above, in Composition I the amount of neutralizer (i.e. sodium bisulfate) was increased compared to the tablets of Composition H, while keeping the same amount of Calhypo 65% w/w. Tests in 40 000 L indoor swimming pools showed that the pH remained stable (i.e. about 7.6 to 7.8) over many weeks with the addition, every 4 days in the skimmer, of 300 g tablets made of Composition I (data not shown). Better results were obtained when the parameters of the swimming pool (i.e. chlorine concentration, pH and alkalinity concentration] we stabilized before starting the treatment with the tablets (data not shown).

### Example 5: Manufacturing and testing a multi-layer compositions for pools

### Composition L

Pucks comprising **Composition L** we manufactured in a bilayer form comprising: (i) a NaDCC layer and (ii) a TCCA/boric acid/aluminium sulfate/zinc oxide layer. The pucks we made by pressing together powders of each of the two layers to obtain bilayer pucks having a global density of about 1.63 g/cm^{3.}

Tests were carried out to assess storage stability of the puck. Briefly, three pucks were kept in an oven at 54°C for 2 weeks, these conditions being equivalent to 1 year of aging at 20°C. The variation of pH and % chlorine are shown in **Table 5** below:

**Table 5: Storage stability of bilayers pucks made comprising Composition L**

| **Day 0** | | | **Day 14** | |
|---|---|---|---|---|
| **Sample** | **pH** | **% chlorine** | **pH** | **% chlorine** |
| **#1** | 3.67 | 72.37 | 4.01 | 70.66 |
| **#2** | 3.59 | 72.16 | 3.83 | 71.59 |
| **#3** | 3.66 | 73.27 | 3.66 | 71.13 |
| **Average** | 3.64 | 72.60 | 3.83 | 71.12 |

As show in the table, the pucks remained stable at high temperature for the whole duration of the test (i.e. 2 weeks) since they displayed only a minimal loss of 1.48% in chlorine and only a slight increase of pH.

Tests were also conducted in a swimming pool. Tablets weighting about 45g to about 55g were put into a 6 000L indoor pool, this ratio corresponding to a tablet of about 300g to about 350g in a 40 000L pool. The temperature of the water pool was maintained at about 21-24°C (about 70-75°F).

It was observed that the NaDCC layer of the puck dissolved in approximately 2 hours while the rest of the puck (i.e. 2^{nd} layer) dissolved in about one week. Therefore, NaDCC layer provided for a rapid "shock treatment" while the other layer provided for a constant slow release of chlorine.

As is known, the pH of a swimming pool has a natural tendency to increase over time. In this study, the pucks comprising Composition L were acidic (pH of about 3.64) and the test was thus a way to test whether, as hoped for, these pucks could counteract the increase in pH in swimming pools.

As shown in **Figure 4****,** when the pool is free of chlorine and a first puck is added to the pool, the pH rises by 0.35 ± 0.09 from its initial value. However, the pH variation decreases as the chlorine concentration increases **(****Figure 4****).** For instance, when the chlorine concentration is >2ppm, the pH of the water does not increase anymore. Therefore, the present pucks successfully prevented the increase in pH. Without being bound by theory, this stabilization is probably due to a higher concentration of HOCI in the water.

Although not shown, over 2 weeks, calcium hardness increased by 10 ± 5.55 ppm with the use of 150g of puck per 6 000L of water

Although not shown, over 2 weeks, stabilizer concentration increased by 10 ± 1 ppm when using 150g of puck per 6 000L of water. This low value advantageously corresponds to an increase of only 60ppm over a period of 3 months.

In conclusions, taking into account the fact that the water of a swimming pool contains constantly between 1 and 3ppm of chlorine, the measured increase of the pH was rather slow and controlled over a period of at least 2 weeks. As for the rest of the measured parameters, their variation is negligible. Moreover, the pucks are stable even at high temperatures, losing a minimal content of chlorine.

### Composition M

Pucks comprising Composition M we manufactured in a bilayer form comprising: (i) a NaDCC/aluminium sulfate/zinc oxide layer and (ii) a TCCA/boric acid/citric acid layer. The pucks we made by pressing together powders of each of the two layers to obtain bilayer pucks having a global density of about 1.42 g/cm³.

Tests were carried out to assess storage stability of the pucks. Briefly, three pucks were kept in an oven at 54°C for 2 weeks, these conditions being equivalent to 1 year of aging at 20°C. The variation of pH and % chlorine are shown in **Table 6** below:

**Table 6: Storage stability of bilayers pucks made comprising Composition M**

| **Day 0** | | | **Day 14** | |
|---|---|---|---|---|
| **Sample** | **pH** | **% chlorine** | **pH** | **% chlorine** |
| **#1** | 3.36 | 71.2 | 3.34 | 68.64 |
| **#2** | 3.34 | 69.38 | 3.24 | 66.56 |
| **#3** | 3.37 | 71.8 | 3.35 | 68.26 |
| **Average** | 3.36 | 70.79 | 3.31 | 67.82 |

As show in the table, the pucks remained stable at high temperature for the whole duration of the test (i.e. 2 weeks) since they displayed only a minimal loss of 2.97% in chlorine and no substantial variation in pH.

Tests were also conducted in a swimming pool. Tablets weighting about 45g to about 55g were put into a 6 000L indoor pool, this ratio corresponding to a tablet of about 300g to about 350g in a 40 000L pool. The temperature of the water pool was maintained at about 21-24°C (about 70-75°F).

It was observed that the NaDCC layer of the puck dissolved in approximately 2 hours while the rest of the puck (i.e. 2^{nd} layer) dissolved in about four (4) days. Therefore, NaDCC layer provided for a rapid "shock treatment" in chlorine, clarifier and algaecide while the other layer provided for a constant slow release of chlorine and neutralizer.

It was also observed that the stabilizer increased by 3 ppm when using 700g of puck per 40,000L of water (1 week), which corresponds to about 36 ppm in 3 months.

During the same experiment (i.e. 700g of puck per 40,000L of water (1 week)), it was also observed that the alkalinity decreased by only 6 ppm, which corresponds to 72 ppm in 3 months.

### Conclusions

During normal use, a pH reducer is typically added to swimming pools each time a shock treatment is carried out.

However, by using a puck of the present invention, it may not be necessary to add a pH reducer following a shock treatment. Nevertheless, it may still be preferable to add a separate pH reducer after a few treatments (e.g. two consecutive weeks of treatment).

Overall examples 1 to 5 demonstrate that many useful compositions can be prepared in accordance with the principle of the present invention. For instance, a mixture comprising calcium hypochlorite (Calhypo), sodium bisulfate, aluminium sulfate and zinc oxide was found to be stable over time and particularly useful to sanitize the waters and stabilize the parameters of pools and spas. Bilayers mixtures comprising separate layers of NaDCC and TCCA were also found to be stable and useful to sanitize the waters and stabilize the pH.

Furthermore the present results show that the water treatment can be done in one single step, i.e. by adding on a regular basis solid tablet(s) comprising a combination of (i) a source of chlorine for killing bacteria, (ii) a neutralizer for ensuring a proper pH balance, (iii) an algaecide for killing algae and (iv) a clarifier for removal of organic matter, thereby making water treatment much easier for consumers.

The results also show that multilayer compositions may be particularly useful to simplify maintenance of pools and spa, e.g. by providing both, a quick release and an extended release of chemicals in the water.

Headings are included herein for reference and to aid in locating certain sections. These headings are not intended to limit the scope of the concepts described therein, and these concepts may have applicability in other sections throughout the entire specification. Thus, the present invention is not intended to be limited to the embodiments shown herein but is to be accorded the widest scope consistent with the principles and novel features disclosed herein.

The singular forms "a", "an" and "the" include corresponding plural references unless the context clearly dictates otherwise. Thus, for example, reference to "a compound" includes one or more of such compounds and reference to "the method" includes reference to equivalent steps and methods known to those of ordinary skill in the art that could be modified or substituted for the methods described herein.

Unless otherwise indicated, all numbers expressing quantities of ingredients, reaction conditions, concentrations, properties, and so forth used in the specification and claims are to be understood as being modified in all instances by the term "about". At the very least, each numerical parameter should at least be construed in light of the number of reported significant digits and by applying ordinary rounding techniques. Accordingly, unless indicated to the contrary, the numerical parameters set forth in the present specification and attached claims are approximations that may vary depending upon the properties sought to be obtained. Notwithstanding that the numerical ranges and parameters setting forth the broad scope of the embodiments are approximations, the numerical values set forth in the specific examples are reported as precisely as possible. Any numerical value, however, inherently contains certain errors resulting from variations in experiments, testing measurements, statistical analyses and such.

It is understood that the examples and embodiments described herein are for illustrative purposes only and that various modifications or changes in light thereof will be suggested to persons skilled in the art and are to be included within the present invention and scope of the appended claims.

## Claims

1. A solid water-treatment composition for swimming pools and spas, comprising a combination of (i) a source of chlorine for killing bacteria and (ii) a neutralizer for ensuring a proper pH balance.

2. The solid water-treatment composition of claim 1, comprising about 20% w/w to about 80% w/w chlorine, and wherein said source of chlorine is selected from the group consisting of calcium hypochlorite, Trichloroisocyanuric acid (TCCA), sodium dichloroisocyanurate (NaDCC) and mixtures thereof.

3. The solid water-treatment composition of claim 1 or 2, comprising about 10% w/w to about 70% w/w neutralizer, and wherein said neutralizer is selected from the group consisting of sodium bisulfate, citric acid, isocyanuric acid, boric acid, sodium carbonate, sodium bicarbonate, sodium citrate, sodium hydroxide, potassium hydroxide, sodium borate and mixtures thereof.

4. The solid water-treatment composition of any one of claims 1 to 3, further comprising at least one of (iii) an algaecide for killing algae and (iv) a clarifier for removal of organic matter.

5. The solid water-treatment composition of any one of claims 1 to 4, further comprising about 0.1% w/w to about 10% w/w algaecide, and wherein the algaecide is selected from the group consisting of zinc oxide, copper sulfate, quaternary ammonium compounds, polixetonium chloride, N-(2-hydroxyl) propyl-3-trimethyl ammonium chitosan chloride and mixtures thereof.

6. The solid water-treatment composition of any one of claims 1 to 5, further comprising about 0.1% w/w to about 20% w/w clarifier, and wherein the clarifier is selected from the group consisting of aluminium sulfate, ferrous sulfate, PolyDADMAC, polyamides, polyacrylamide, gamma polygluconic acid, chitosan and mixtures thereof.

7. The solid water-treatment composition of any one of claims 1 to 6, comprising trichloroisocyanuric acid (TCCA), sodium dichloroisocyanurate (NaDCC), boric acid, aluminium sulfate and zinc oxide.

8. The solid water-treatment composition of any one of claims 1 to 7, wherein said composition consists of Composition L or of Composition M:
| | Composition L |
|---|---|
| | %w/w |
| TCCA (90% w/w chlorine) | 62.10 |
| NaDCC (62 %w/w chlorine) | 33.52 |
| Boric acid | 1.27 |
| Aluminium sulfate | 2.61 |
| Zinc oxide (96 %w/w zinc) | 0.49 |
| | Composition M |
|---|---|
| | %w/w |
| TCCA (90% w/w chlorine) | 54.39 |
| NaDCC (62 %w/w chlorine) | 29.36 |
| Boric acid | 1.11 |
| Aluminium sulfate | 2.29 |
| Zinc oxide (96 %w/w zinc) | 0.29 |
| Citric acid | 12.57 |

9. The solid water-treatment composition of any one of claims 1 to 7, wherein said composition is selected from the group consisting of Composition H, Composition I, Composition J and Composition K:
| | Composition H | Composition I |
|---|---|---|
| | % w/w | % w/w |
| Calhypo (65% w/w chlorine) | 78.28 | 78.28 |
| Sodium bisulfate | 19.89 | 20.67 |
| Aluminium sulfate | 1.28 | 0.50 |
| Zinc Oxide (96% w/w zinc) | 0.55 | 0.55 |
| | Composition J | Composition K |
|---|---|---|
| | %w/w | %w/w |
| TCCA (90% w/w chlorine) | 69.30 | - |
| Calhypo (65%w/w chlorine) | - | 85.90 |
| Sodium carbonate | 26.89 | - |
| Citric acid | - | 13.61 |
| Aluminium sulfate | 3.26 | - |
| Zinc Oxide (96 %w/w zinc) | 0.55 | 0.49 |

10. The solid water-treatment composition of any one of claims 1 to 9, wherein said solid water-treatment composition is compacted in the form of any one of a puck, a tablet, a briquette, a capsule, a powder mix, a granule and an agglomerate.

11. The solid water-treatment composition of any one of claims 1 to 10, wherein said solid water-treatment composition is a multilayer composition.

12. The solid water-treatment composition of claim 1, said composition consisting essentially of (i) a source of chlorine, (ii) a neutralizer, (iii) an algaecide and (iv) a clarifier.

13. A bilayer solid water-treatment composition comprising: (i) a first layer comprising sodium dichloroisocyanurate (NaDCC); and a second layer comprising Trichloroisocyanuric acid (TCCA), wherein said bilayer solid water-treatment composition is compacted in the form of a puck, a tablet, a briquette, or a capsule.

14. The bilayer solid water-treatment composition of claim 13, wherein at least one of the first and second layer comprises boric acid or citric acid.

15. The bilayer solid water-treatment composition of claim 13 or 14, wherein at least one of the first and second layer comprises aluminium sulfate or zinc oxide.

16. The bilayer solid water-treatment composition of any one of claims 13 to 15, wherein the composition comprises Composition L or Composition M:
- Composition L: (i) a NaDCC layer; and (ii) a TCCA/boric acid/aluminium sulfate/zinc oxide layer;
- Composition M: (i) a NaDCC/aluminium sulfate/zinc oxide layer; and (ii) a TCCA/boric acid/citric acid layer.

17. The solid water-treatment composition of any one of claims 13 to 16, wherein said solid water-treatment composition is compacted in the form of a puck, a tablet, a briquette, a capsule, a powder mix, a granule or an agglomerate.

18. A method for treatment of water of a swimming pool or a spa, comprising depositing in said pool or spa one or more of a puck, tablet, briquette, capsule, a powder mix, granule and agglomerate composed of a compacted water-treatment composition as defined in any one of claims 1 to 12, or comprising depositing in said pool or spa the bilayer solid water-treatment composition as defined in any one of claims 13 to 17.
